# EUROPEAN PATENT SPECIFICATION

(11) **EP 2 202 550 B1**
(45) Date of publication and mention of the grant of the patent: **07.09.2011**
(21) Application number: 08172894.1
(22) Date of filing: 24.12.2008
(51) Int. Cl.: G02B 6/42, G06N 99/00

(54) **Single-photon sources**
Einzelphotonenquellen
Sources de photon unique

(43) Date of publication of application: 30.06.2010
(73) Proprietor: Hitachi Ltd., Tokyo (JP)
(72) Inventor: Xu, Xiulai, Cambridge, Cambridgeshire CB3 0HE (GB); Williams, David, Cambridge, Cambridgeshire CB3 0HE (GB)
(74) Representative: Piotrowicz, Pawel Jan Andrzej

(56) References cited:
- US-A1- 2006 210 083
- US-A1- 2007 183 471
- US-A1- 2007 210 299
- XU XIULAI ET AL: "Plug and Play single photons at 1.3 micrometers approaching gigahertz operation" APPLIED PHYSICS LETTERS, AIP, AMERICAN INSTITUTE OF PHYSICS, MELVILLE, NY, US, vol. 93, no. 2, 18 July 2008 (2008-07-18), pages 21124-21124, XP012112407 ISSN: 0003-6951
- XU XIULAI ET AL: "Plug and play single-photon sources" APPLIED PHYSICS LETTERS, AIP, AMERICAN INSTITUTE OF PHYSICS, MELVILLE, NY, US, vol. 90, no. 6, 5 February 2007 (2007-02-05), pages 61103-061103, XP012095891 ISSN: 0003-6951
- REITHMEIER JP ET AL: "Strong coupling in a single quatum dot-semiconductor microcavity system" NATURE, vol. 432, 11 November 2004 (2004-11-11), pages 197-200, XP002525892
- FATTAL D, ET AL.: "Entanglement formation and violation of bell's inequality with a semiconductor single photon source" PHYSICAL REVIEW LETTERS, vol. 92, no. 3, 23 January 2004 (2004-01-23), pages 037903-1-037903-1, XP002525893
- XIULAI XU ET AL: "Single-photon sources with optical fibre integration" JOURNAL OF PHYSICS: CONFERENCE SERIES, INSTITUTE OF PHYSICS PUBLISHING, BRISTOL, GB, vol. 61, no. 1, 1 April 2007 (2007-04-01), pages 1271-1275, XP020124649 ISSN: 1742-6596

## Description

The present invention relates to single-photon sources.

Single-photon sources are needed for quantum information processing and quantum communication applications, such as quantum key distribution, linear optical quantum computation and quantum teleportation. An overview of single-photon sources is given in the introduction to EP-A-1 503 328.

As explained in EP-A-1 503 328 *ibid*., some prior art single-photon sources are based on highly-attenuated lasers in which the average photon number per pulse is significantly less than one.

In a conventional micro-photoluminescence system which generates single photons, a confocal microscope is used to focus pumping light (or "excitation light") onto a sample (i.e. a wafer die or "chip") which is mounted on a cold finger in cryostat and which contains indium arsenide quantum dots. The microscope collects photons emitted by a quantum dot. The photons are separated from the pumping light using a dichroic mirror.

Vibration can often be problem in these types of sources since the microscope is separate from the sample, located outside a cryostat. Vibration leads to changes in intensity and photons sources, such as those used micro-photoluminescence, tend to be stable for only a few hours.

The effect of vibration can be reduced by attaching an optical fibre directly to the sample using optical glue. To help ensure that the optical fibre collects photons from only one quantum dot, the wafer is usually grown in such a way that the density of quantum dots is low, for example of the order of 0.1 dots/µm². However, lowering the dot density increases the chance that, when an optical fibre is attached to the wafer, it is located in position where there are no suitable quantum dots. Thus, if no photons are obtained, then there is little choice but to discard the fibre and sample and to attach a new optical fibre to a new sample.

A solution to this problem is to mount more than one optical fibre to the sample. Furthermore, optical fibres need not be glued but can be reversibly brought into contact with the sample.

"Plug and play single-photon sources" by X. L. Xu, I. Toft, R. T. Phillips, J. Mar, K. Hammura, and D. A. Williams, Applied Physics Letters, volume 90, page 061103 (2007) describes a source of single photons integrated with an optical fibre system. Around 600 optical fibres are bound together into a bundle and polished at one end. Using a jig comprising a bundle holder and a sample holder, the polished end of the bundle of optical fibres is allowed to rest on top of the surface of the sample. One of the optical fibres in the bundle can be selected and connected, via a wavelength division multiplexing system, which allow excitation light and emitted light to be carried in the same optical fibre. Wavelength division multiplexing acts as a dichroic beam splitter and has a special coating which prevents excitation light being reflected into the output fibre carrying the emitted signal.

Another similar system is described in "Plug and play single photons at 1.3 µm approaching gigahertz operation" by X. L. Xu, F. Brossard, K. Hammura, D. A. Williams, B. Alloing, L. H. Liu and A. Fiore, Applied Physics Letters, volume 93, page 021124 (2008). In this case, a layer structure is used in which quantum dots are embedded in a cavity between two distributed Bragg reflectors to increase efficiency of extraction. The sample is also patterned to form pillars so as to help reduce the number of quantum dots per optical fibre.

In this system, single photons generated in one pillar tend to have different characteristics, such as energy, from those generated in another pillar and, thus, can be distinguished from each other. Therefore, these photons cannot be properly entangled and used in applications requiring entangled photons, such as quantum computation and quantum teleportation.

The present invention seeks to ameliorate this problem.

According to a first aspect of the present invention there is provided an apparatus as stated in claim 1, comprising at least two photon sources supported on a common substrate, each photon source comprising a pillar upstanding from the substrate in a first direction and in which at least one quantum dot is disposed within a cavity formed in the first direction between two mirrors, the pillar having a light-emitting surface, the apparatus further comprising an optical fibre bundle comprising at least two optical fibres having light-receiving ends, wherein each optical fibre has first and second ends, the first end being the photon-receiving end, and the apparatus also comprising a jig for removably coupling the light-receiving ends to the light emitting surfaces wherein the cavities each are configured to have a quality factor of at least 10⁴ and the pillars have a diameter in a second, transverse direction such that the cavities exhibit the same optical mode and the apparatus further comprises at least two wavelength division multiplexers, each multiplexer connected to respective second ends of the optical fibres for selectively extracting photons from the second ends of the optical fibres.

Controlling the optical modes of the cavities in the first and second directions can help to limit the characteristics of photons concurrently emitted by the photon sources so that the photons are indistinguishable.

The two mirrors may comprise first and second distributed Bragg reflectors, the first distributed Bragg reflector comprising a first number of periods of alternating layers having different indices of refraction and the second distributed Bragg reflector comprising a second, smaller number of periods of alternating layers having different indices of refraction.

The first number may be at least 20 and may be at least 23. The second number may be at least 10 and may be at least 13. The pillars may each have a diameter between about 0.5 µm and about 2 µm.

The photons may have a wavelength between about 400 nm and about 1500 nm. The quantum dots may comprise aluminium nitride or indium arsenide.

The bundle may comprise at least 10 optical fibres, at least 20 optical fibres, at least 50 optical fibres or at least 100 optical fibres.

The apparatus may further comprise means for entangling first and second photons emitted by respective first and second ones of the at least two photon sources, such as a beam splitter.

According to a second aspect of the present invention there is provided a method, as stated in claim 11, of generating a pair of single photons, the method comprising providing at least two photon sources supported on a common substrate, each photon source comprising a pillar upstanding from the substrate in a first direction and in which at least one quantum dot is disposed within a cavity formed in the first direction between two mirrors, the pillar having a photon-emitting surface, wherein the cavities each have a quality factor of at least 10⁴ and the pillars have a diameter in a second, transverse direction such that the cavities exhibit the same optical mode, providing an optical fibre bundle comprising at least two optical fibres having photon-receiving ends wherein each optical fibre has first and second ends, the first end being the photon-receiving end and providing a jig for removably coupling the photon receiving ends to the photon emitting surfaces, coupling the first ends of the optical fibres to the photon emitting surfaces, providing at least two wavelength division multiplexers, each multiplexer connected to respective second ends of the optical fibres, supplying excitation light, through the multiplexers, into the second ends of the optical fibres such that the excitation light is emitted by the first ends and selectively extracting photons, through the multiplexers, from the second ends of the optical fibres.

The method may further comprise receiving first and second photons emitted by respective first and second ones of the at least two photon sources and entangling said first and second photons.

The method may further comprise receiving at least one further photon including a third photon emitted by a third photon source supported on the common substrate and selectively extracted from a third optical fibre through another multiplexer and entangling said first and third photons.

Certain embodiments of the present invention will now be described, by way of example, with reference to the accompanying drawings in which:
Figure 1 is a schematic view of a part of apparatus for producing indistinguishable photons in accordance with the present invention;
Figure 2 is perspective view of the part of the apparatus shown in Figures 1 and 2;
Figure 3 is a schematic block diagram of apparatus for producing indistinguishable photons in accordance with the present invention;
Figure 4 is cross section of a wafer from which a sample is obtained, patterned and used in the apparatus shown in Figures 1 and 2;
Figure 5 illustrates the wafer shown in Figure 4 during growth of quantum dots;
Figure 6 is a plan view of an array of pillars of a patterned sample used in the apparatus shown in Figures 1 and 2;
Figure 7 is a cross sectional view of a pillar shown in Figure 6;
Figure 8 is a perspective view of a base, sample supporting plate and posts of a sample holder shown in Figures 1 and 2;
Figure 9 is a perspective view of an underside of a sample cover;
Figure 10 is a perspective view of an assembled sample holder;
Figure 11 is a perspective view of bundle of optical fibres and a collar of a fibre holder;
Figure 12 is a perspective view of a platform used to support the collar and the bundle of optical fibres shown in Figure 11;
Figure 13 is a perspective view of an assembled bundle holder shown in Figures 1 and 2;
Figure 14 is a schematic block diagram of apparatus for entangling photons; and
Figure 15 is a schematic block diagram of more complex apparatus for entangling photons.

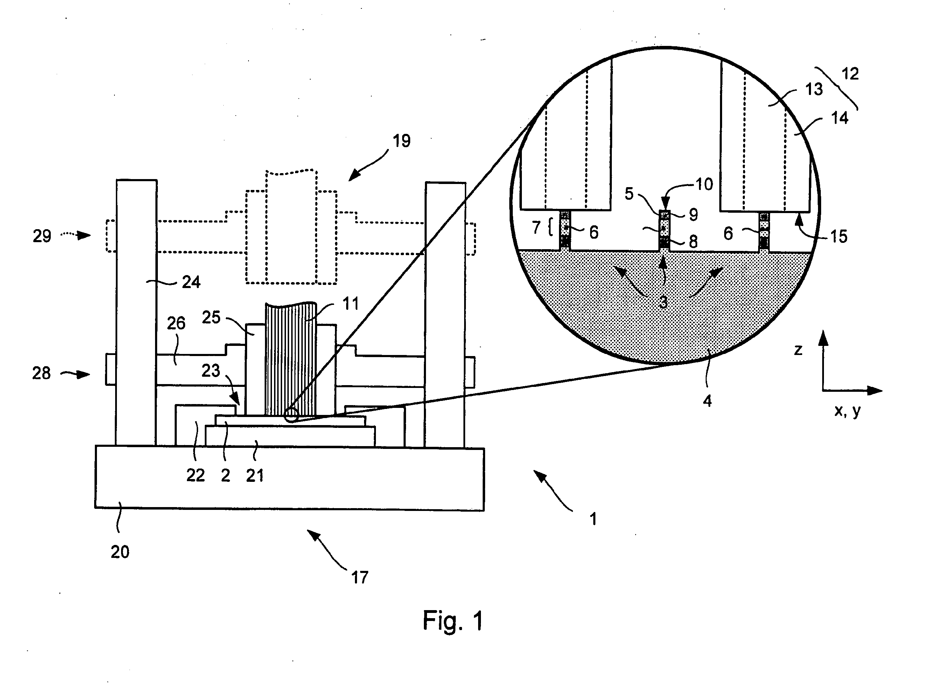

Referring to Figures 1, 2 and 3, a photoluminescence apparatus 1 for producing indistinguishable photons is shown.

The apparatus 1 includes a patterned wafer chip 2 (hereinafter referred to as a "sample") having an array of photon sources 3 supported on a common substrate 4. Each photon source 3 comprises a micron-sized pillar 5 upstanding from the substrate 4 having one or more quantum dots 6 disposed within a cavity 7 formed between two mirrors 8, 9 in the form of distributed Bragg reflectors. As will be explained in more detail later, the distributed Bragg reflectors 8, 9 are arranged so that a photon emitted by a quantum dot 6 is emitted through a top 10 of the pillar 5.

The apparatus 1 includes an optical fibre bundle 11 of about 600 single-mode optical fibres 12. Each fibre 12 has a core region 13 and a cladding region 14. The core region 13 has a diameter of about 9 µm and the cladding region 14 has an (outer) diameter of about 250 µm. Figure 1 does not show dimensions, such as the relative size of the core and cladding regions 13, 14, to scale.

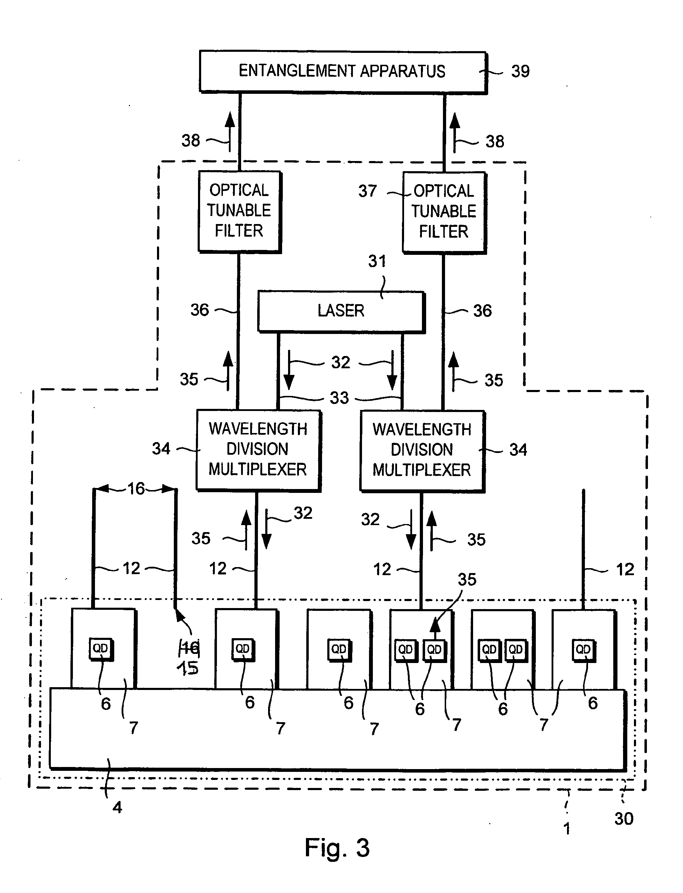

Each fibre 12 has first and second ends 15, 16 (Figure 3). As will be explained in more detail later, the optical fibres 12 can be used to deliver pumping light 32 (Figure 3) to excite quantum dots 6. The core 13 of a fibre 12 may be located over a pillar 5. Thus, the fibre 12 can deliver pumping light 32 (Figure 3) to that pillar 5 and, if the pillar 5 contains a suitable quantum dot 6, receives light 35 (Figure 3) emitted by the quantum dot 6.

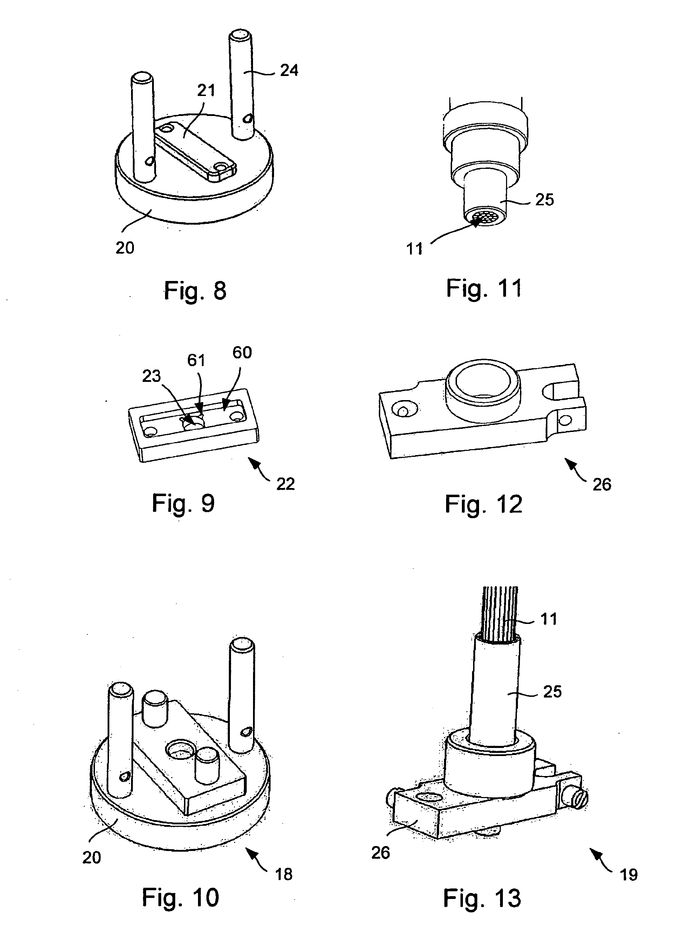

The apparatus 1 includes a jig 17 for reversibly coupling the first ends 15 of the fibres 12 to the tops 10 of the pillars 5. The jig 17 includes a sample-holding part 18 and a moveable, bundle-holding part 19, as shown in Figures 10 and 13.

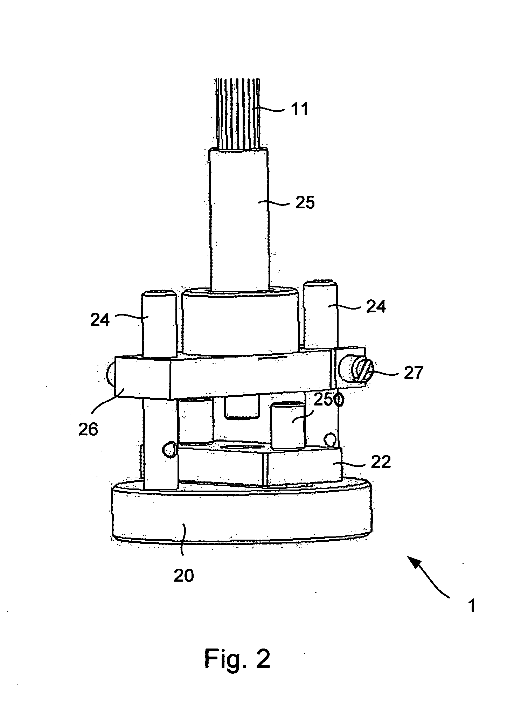

The sample-holding part 18 includes a base 20, a sample-supporting plate 21 fixed to the base 20, a sample cover 22 having a window 23 and a pair of posts 24. The sample 2 can be held between the sample support 21 and sample cover 22 with the sample cover 22 secured to the base 20 by screws 250 (Figure 2). The posts 24 are upstanding from the base 20 and carry the bundle-holding part 19.

The bundle-holding part 19 includes a collar or sheath 25 supported by a platform 26 which is secured to the posts 24 by screws 27 (Figure 2). Loosening the screws 27 (Figure 2) allows the platform 26 and, thus, the collar 25 and bundle 11 of optical fibres 12, to be raised and lowered. In Figure 1, the bundle-holding part 19 is shown resting in first, lowered position 28. In this position, the ends 15 of the fibres 12 are in contact with the sample 2. As shown in Figure 2, the bundle-holding part 19 can be raised into a second position 29. Thus, if necessary, the sample cover 22 can be removed and the sample 2 replaced with a new sample.

Referring in particular to Figure 3, the sample 2, end of the fibre bundle 11 and jig 19 are immersed in a dewar 30 of liquid helium to cool the sample 2 to 4.2 K.

The apparatus 1 includes a helium-neon laser 31 for providing pumping light 32 via input fibres 33. In this example, the laser 31 operated in pulse mode. The pulses can be generated using a mode locked laser, fibre intensity modulator or acoustic intensity modulator. The repetition rate can be up to 1 GHz with 10 ps pulses. The input fibres 33 feed into respective wavelength division multiplexers 34. In turn, the wavelength division multiplexers 34 feed into respective fibres 12 in the bundle 11 which excites quantum dots 6 in two pillars 5.

Light 35 emitted from the quantum dots 6 are collected by the same fibres 12 used to excite the dots 6. For each fibre 12, the wavelength division multiplexer 34 (which acts as a dichroic mirror) isolates the emitted light 35 and supplies it to an output fibre 36.

Even though wavelength division multiplexers 34 are used, some pumping light 32 may still enter the output fibres 36. Furthermore, photons emitted resulting from biexciton recombination may also entre the output fibres 36. Photons resulting from a biexciton recombination generally have an energy just a few meV from the photons resulting from a single exciton recombination.

Therefore, to obtain a single-exciton recombination line for single-photon emission, high-resolution filters 37 having a narrow line width (for example of about 0.7 nm) are used. The filters 37 are tuneable, for example, able to select a wavelength in the range between about 1280 nm to 1320 nm. Using the filters 37, single photons 38 corresponding to single exciton recombination can be obtained and passed to an apparatus 39 which can use indistinguishable photons 38, which may be emitted substantially simultaneously, for example by entangling the photons 38.

The size of the quantum dots 6 can vary across the sample 2. Thus, different quantum dots 6 may emit photons at different energies. Ordinarily, this would result in photons which can be distinguished.

Cavities can be fabricated which have the same or at least very similar resonant frequencies and which have a high value of quality factor (Q) so that they have exhibit the same or at least very similar optical modes. Quantum dots can be positioned in these high-Q cavities. Even if a cavity contains more than one quantum dot, emission from dots matching resonant frequency of the cavity will be enhanced, whereas emission from those dots which do not match the resonant frequency (i.e. those that are too big or too small) will be suppressed.

Thus, by forming cavities which have a high value of Q and laterally confining the cavities by forming pillars with the same diameter which may further increase Q and which can be chosen to select a particular mode, quantum dots across the sample can be made to emit photons having the same energy and which are indistinguishable.

If such "microcavities" are used, then a higher density of quantum dots can be used which can help to increase the chances of finding two or more sources of indistinguishable photons. Increasing the density of quantum dots increases the number of quantum dots within a cavity and thus increases the chance that one of the dots will emit photons at the required energy. Even though the number of quantum dots which can emit photons at other energies will also increase, emission from these photons will be suppressed.

To help produce indistinguishable photons 38, the mirrors 8, 9 (Figure 1) forming the cavities 7 each have a quality factor of at least 10,000 (i.e. 10⁴) and the pillars 5 have a diameter such that the optical modes in the cavities 7 are controlled to such a degree that the cavities 7 exhibit the same optical mode.

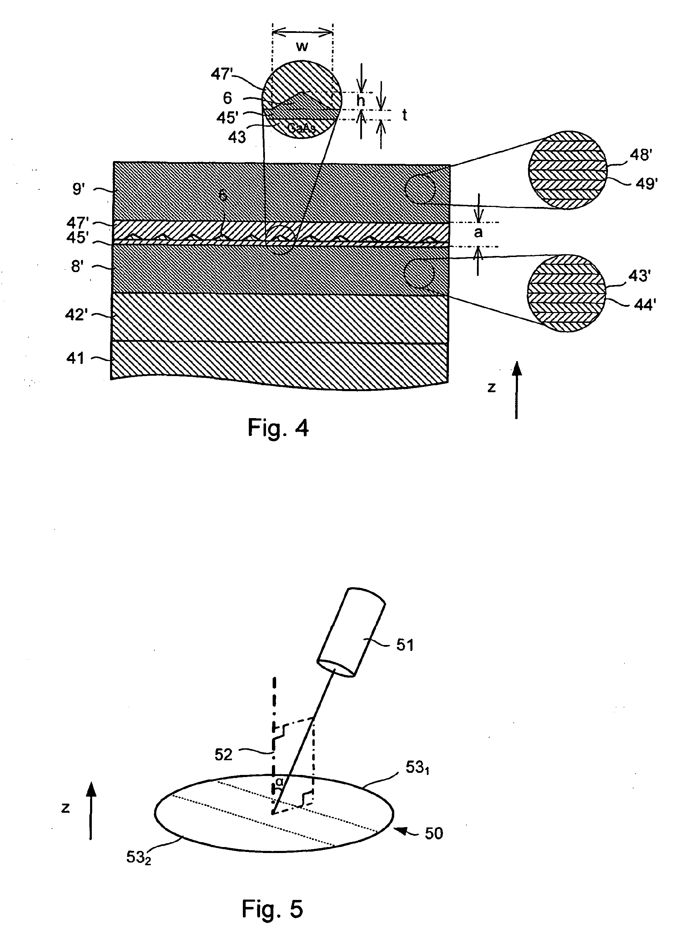

Referring to Figure 4, a layer structure of a wafer grown by molecular beam epitaxy and from which the sample 2 is fabricated is shown.

The microcavities enhance emission by shortening lifetime of dot emission, which helps entanglement when two photon interference. For example, recombination lifetime in a cavity may be about 200 ps (compared with a lifetime of about 1 ns in the unpatterned layer structure).

The layer structure is grown on an intrinsic GaAs substrate 41 on a buffer layer 42 comprising epitaxial intrinsic GaAs having a thickness of about 500 nm.

The layer structure includes alternating layers 43' of dielectric material having a relatively high index of refraction and layers 44' of dielectric material having a relatively low index of refraction. These layers 43', 44' are used to form the lower distributed Bragg reflector 8 (Figure 1).

There are 26 pairs of layers 43', 44'. However, the number of layers can be different. For example, there may be more than 23 pairs of layers.

For emission at a wavelength (λ) of 1.3 µm, the layers 43', 44' comprise GaAs and Al_{0.9}Ga_{0.1}As respectively having a thickness of 110 and 90 nm respectively. Other materials, such as AlₓGa₁₋ₓAs having different aluminium content (i.e. x), can be used to provide a mirror at the same wavelength. Other materials and other layer thicknesses can be used to provide a mirror at other wavelengths.

InAs is grown on top of the distributed Bragg reflector layers 8' (on the last GaAs layer 43) using Stranski -Krastinov technique which results in a thin InAs wetting layer 45' having a thickness, t, of about 1 nm and self-assembled InAs quantum dots 6 having a height, h, of about 5 nm and a width, w, of about 20 nm. This is followed by a GaAs capping layer 47' having a thickness of between 20 and 200 nm, for example about 50 nm thick.

The material used to form the quantum dots 6 (and the wetting layer 45') may be different to that described earlier. For example, the quantum dots 6 may be formed of GaN. Moreover the shape and dimensions of the quantum dots 6 may also be different to those described earlier. The materials, geometry and dimensions may be chosen according to the desired wavelength.

The material used to form the capping layer 47' may also be different and may be, for example, InGaAs.

Alternating layers 48' of dielectric material having a relatively high index of refraction and layers 49' of dielectric material having a relatively low index of refraction are then grown. These layers 48', 49' are used to form the upper distributed Bragg reflector 9 (Figure 1).

There are 13 pairs of layers 48', 49'. However, the number of layers can be different. For example, there may be more than 13 pairs of layers 48, 49 provided that the number of pairs of layer 48', 49' does not exceed the number of pairs of layers 43', 44' in the lower distributed Bragg reflector layers 8'

For emission at 1.3 µm, the layers 48', 49' comprise GaAs and Al_{0.9}Ga_{0.1}As respectively having a thickness of 110 and 90 nm respectively. As mentioned earlier in relation to the bottom mirror layers 8', other materials and layer thicknesses can be used.

The top of the lower mirror layer 8' and the bottom of the upper mirror layers 9' are separated by a length, a, of about 20 to about 200 nm.

The periods of distributed Bragg reflector layers 8', 9' are chosen to enhance the emission rate and collection efficiency in the direction of growth.

The density of quantum dots 6 is low, i.e. less than 2×10⁸ cm⁻². To help achieve this, the wafer is not rotated during growth.

Referring to Figure 5, the concentration of indium across wafer 50 is different because of an indium source 51 tends to be misaligned, i.e. directed at an angle α from normal 52. Indium flux is non-uniform across the wafer 50 which results in variation of InAs dot density across the wafer 50. The InAs dot density varies from being negligible at a low indium flux edge 53₁ of the wafer 50 to about 10¹⁰ cm⁻² on the opposite edge 53₂.

The layer structure H is etched to define pillars and form microcavities which leads to strong coupling between quantum dots and cavity modes. Reference is made to "Strong coupling in a single quantum dot-semiconductor microcavity system" by J. P. Reithmaier, G. Sek, A. Loffler, C. Hofmann, S. Huhn, S. Reitzenstein, L. V. Ledysh, V. D. Kualkovskii, T. L. Reinecke & A. Forshel, Nature, Volume 432, page 197 (2004).

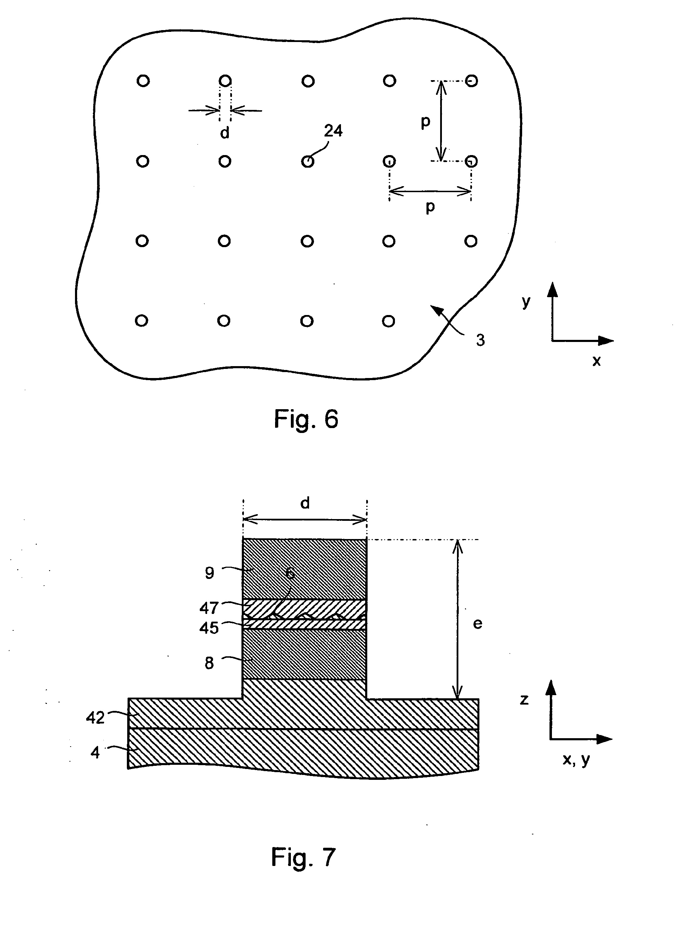

Referring to Figure 6, the pillars 5 have a diameter, d, of about 1 µm. The pillars 5 are arranged in a rectangular array having a pitch, p, of about 15 µm, i.e. greater than the diameter of the core 13. As a result, each fibre 12 supplies pumping light to one pillar 5 and receives emitted light from the pillar 5.

Referring to Figure 7, the pillar 5 has a height, e, of about 5 to about 10 µm.

The pillar 5 is formed using electron-beam lithography and reactive-ion etching. In this example, reactive ion etching is carried out using SiCl₄ and Ar as feed gasses (each gas flow rate is about 10 sccm) at about 10 mTorr and 100 W. A negative resist can be used to form a soft etch mask or a positive resist can be employed in conjunction with evaporation of thin film (for example aluminium) and lift-off to define a hard etch mask. The etch mask is removed after etching.

Once the sample 2 is prepared it can be mounted in the jig 17 which allows the polished end of the bundle 11 to be brought as near as to the surface of the sample 2 so as to minimise any air gap. The jig 17 helps to hold the sample 2 without it moving as it cools down, i.e. when immersed in liquid helium

Referring to Figures 2 and 8 to 13, the jig 17 is described in more detail.

Referring in particular to Figure 8, the jig 17 has a base 20 having a diameter of 25 mm which supports the sample supporting plate 21 and two posts 24 located close to the edge of the base 20. The sample supporting plate 21 is sits proud of the base 20 and helps to ensure that the cover 22 (Figure 9) does not move when supported.

Referring in particular to Figure 9, the underside of cover 22 is shown in more detail. The underside of the cover 22 has a rectangular recess 60 and is shaped to fit the supporting plate 21 and a further, inner recess 61 which is a little larger than 5×5 mm² and which is shaped to accommodate the sample 2.

Figure 10 shows the sample-holding part 18 when assembled.

Referring in particular to Figure 11, the fibre bundle 11 is inserted into a copper tube 25 (i.e. collar or sheath) which are polished together. The outer diameter of copper tube 25 matches diameter of a central window 23 in the sample cover 22 and the length of the tube 25 is greater than the thickness of the cover 22.

The tube 25 is inserted into the platform 26 shown in Figure 12.

Figure 13 shows the bundle-holding part 19 when assembled.

Referring to Figure 2, the bundle-holding part 19 is mounted onto the sample-holding part 18 by sliding it onto the posts 24. Once the polished bundle surface touches the sample surface, the screws 27 on the platform 26 are tightened. The two screws 27 direct a force parallel to the sample 2 which helps to avoid applying force onto the sample 2 and, thus, break the sample 2. The sample 2 is ready to be dipped in the dewar 30 (Figure 3).

Further details regarding the jig 17 and the measurement and characterization of individual single photon sources may be found in "Plug and play single-photon sources" *ibid.* and "Plug and play single photons at 1.3 µm approaching gigahertz operation" *ibid.*

Referring again to Figure 1, the pitch of the array 3 (Figure 6) is chosen so that no two pillars can be found in one fibre 12. However, the pillars 5 are randomly distributed with respect to the fibres 12 in the bundle 11 which are also randomly assembled. Therefore, some quantum dots may not be located in quite the right position for maximum coupling efficiency. However, due to the large number of fibres 12, there is a good chance that at least two fibres 12 can be found which are in a suitable position to be coupled to quantum dots 6, which have good devices being found.

As explained earlier, the mirrors 8, 9 are arranged so that emission from the quantum dots is directed in the growth direction (i.e. along the z-axis) which helps to increase collection efficiency.

The single-photon sources 4 can be driven at high repetition rates (for example about 1 GHz) resulting in a high bit rate (for example about 10⁹ photons per second). The high bit rate can have an advantage of reducing jitter.

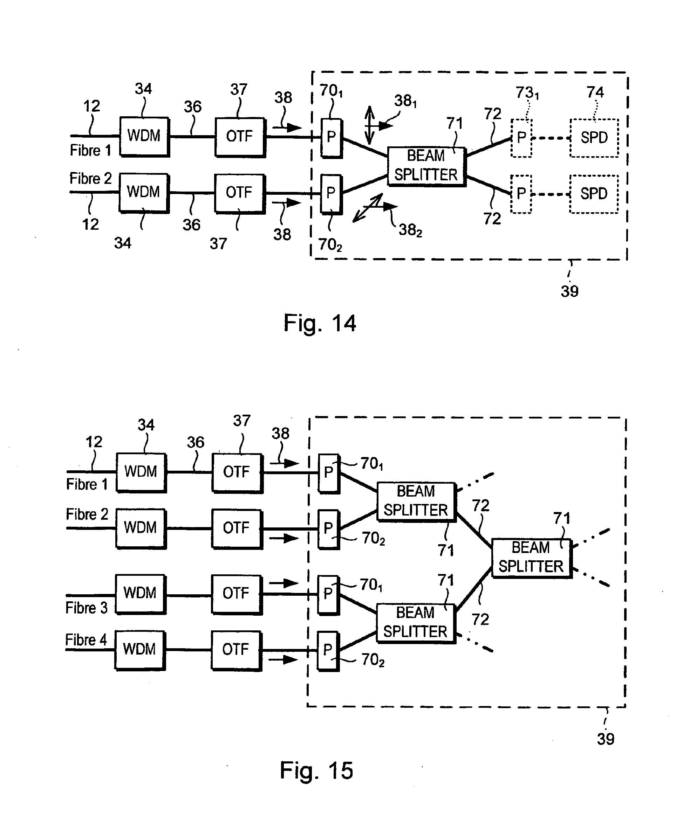

Photons concurrently generated by different quantum dots can be entangled using the arrangement shown in Figure 14.

As shown in Figure 14, the entanglement apparatus 39 (Figure 3) may include a pair of crossed linear polarizers 70₁, 70₂, for example one arranged vertically and the other horizontally, and a non-polarizing beam splitter 71.

One photon 38 passes through one linear polarizer 70₁ and another photon 38 passed through the other polarizer 70₂, Cross-polarized photons 38₁, 38₂ are directed at the beam splitter 71 where they interfere and become entangled.

As also shown in Figure 14, outputs 72 from the beam splitter 71 may be fed into respective linear polarizers 73₁, 73₂ and into single-photon detectors 74.

In a process known as "quantum state tomography", a density matrix can be formed by changing the combination of the two polarizers 70₁, 70₂, and which can be used to confirm. Reference is made to "Entanglement Formation and Violation of Bell's Inequality with a Semiconductor Single Photon Source" by D. Fattal, K. Inoue, J. Vu 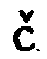 kovi, C. Santori, G. S. Solomon and Y. Yamamoto, Physical Review Letters, volume 92, page 037903 (2004).

Figure 15 shows a more complex entanglement arrangement.

As shown in Figure 15, the entanglement apparatus 39 may include a cascade of beam splitters 71 in which an output 72 from one beam splitter is fed into another beam splitter 71.

Thus, if a first pair of photons 38 are entangled, a second pair of photons are entangled and one photon from each pair are entangled, then all four photons become entangled.

Thus, three, four or more photons 38 can be entangled using this type of arrangement. Entangling photons multiple successive times can be used in teleportation over long distances.

It will be appreciated that many modifications may be made to the embodiments hereinbefore described. For example, different layer structures may be used using other materials. The sample may be cooled to below 4.2 K, for example using a dilution refrigerator.

## Claims

1. Apparatus comprising:
at least two photon sources (3) supported on a common substrate (4), each photon source comprising a pillar (5) upstanding from the substrate in a first direction and in which at least one quantum dot (6) is disposed within a cavity (7) formed in the first direction between two mirrors (8, 9), the pillar having a light-emitting surface (10);
an optical fibre bundle (11) comprising at least two optical fibres (12) having light-receiving ends (15), wherein each optical fibre has first and second ends (15, 16), the first end being the photon-receiving end; and
a jig (17) for removably coupling the light receiving ends to the light emitting surfaces,
**characterised in that** the cavities each have a quality factor of at least 10⁴ and the pillars are configured to have a diameter in a second, transverse direction such that the cavities exhibit the same optical mode and the apparatus further comprises:
at least two wavelength division multiplexers (34), each multiplexer connected to respective second ends (16) of the optical fibres for selectively extracting photons (35) from the second ends of the optical fibres.

2. Apparatus according to claim 1, wherein the two mirrors (8, 9) comprises first and second distributed Bragg reflectors, the first distributed Bragg (8) reflector comprising a first number of periods of alternating layers (43', 44') having different indices of refraction and the second distributed Bragg reflector (9) comprising a second, smaller number of periods of alternating layers (48', 49') having different indices of refraction.

3. Apparatus according to claim 2, wherein the first number is at least 20 and, optionally, at least 23.

4. Apparatus according to claim 2 or 3, wherein the second number is at least 10 and, optionally, at least 13.

5. Apparatus according to any preceding claim, wherein the pillars (5) have a diameter between about 0.5 µm and about 2 µm.

6. Apparatus according to any preceding claim, wherein the photons (35) have a wavelength between about 400 nm and about 1500 nm.

7. Apparatus according to any of claims 1 to 6, wherein the quantum dots (6) comprise aluminium nitride or indium arsenide.

8. Apparatus according to any preceding claim, wherein the bundle (11) comprises at least 10 optical fibres or preferably at least 20 optical fibres.

9. Apparatus according to any preceding claim, further comprising:
means (39) for entangling first and second photons (35) emitted by respective first and second ones of the at least two photon sources (3).

10. Apparatus according to claim 9, wherein the photon entangling means includes a beam splitter (71).

11. A method of generating at least a pair of single photons, the method comprising:
providing at least two photon sources (3) supported on a common substrate (4), each photon source comprising a pillar (5) upstanding from the substrate in a first direction and in which at least one quantum dot (6) is disposed within a cavity (7) formed in the first direction between two mirrors (8, 9), the pillar having a photon-emitting surface (10), wherein the cavities each have a quality factor of at least 10⁴ and the pillars have a diameter in a second, transverse direction such that the cavities exhibit the same optical mode;
providing an optical fibre bundle (11) comprising at least two optical fibres (12) having photon-receiving ends (15), wherein each optical fibre has first and second ends (15, 16), the first end being the photon-receiving end;
providing a jig (17) for removably coupling the photon receiving ends to the photon emitting surfaces;
coupling the first ends of the optical fibres to the photon emitting surfaces;
providing at least two wavelength division multiplexers (34), each multiplexer connected to respective second ends (16) of the optical fibres;
supplying excitation light (32), through the multiplexers, into the second ends of the optical fibres such that the excitation light is emitted by the first ends to excite the quantum dots in the cavities; collecting light (35) emitted by the quantum dots at the photon receiving end (15) of the fiber (12); and
selectively extracting photons (35), through the multiplexers, from the second ends of the optical fibres.

12. A method according to claim 11, further comprising:
receiving first and second photons (35) emitted by respective first and second ones of the at least two photon sources (3); and
entangling said first and second photons.

13. A method according to claim 12, further comprising:
receiving at least one further photon including a third photon emitted by a third photon source (3) supported on the common substrate (4) and selectively extracted from a third optical fibre through another multiplexer; and
entangling said first and third photons.

## Patentansprüche

1. Gerät, umfassend:
Wenigstens zwei Photonenquellen (3), die auf einem gemeinsamen Substrat (4) getragen sind, wobei jede Photonenquelle eine Säule (5) umfasst, die von dem Substrat in einer ersten Richtung vorsteht und in der wenigstens ein Quantenpunkt (6) innerhalb eines Hohlraums (7) vorgesehen ist, der in der ersten Richtung zwischen zwei Spiegeln (8, 9) ausgebildet ist, wobei die Säule eine Licht emittierende Oberfläche (10) aufweist;
ein optisches Faserbündel (11), das wenigstens zwei optische Fasern (12) mit Licht empfangenden Enden (15) aufweist, wobei jede optische Faser erste und zweite Enden (15, 16) besitzt, wobei das erste Ende das Photonen empfangende Ende ist; und
eine Kupplung (17) zum lösbaren Koppeln der lichtempfangenden Enden an die Licht emittierenden Oberflächen,
**dadurch gekennzeichnet, dass** die Hohlräume jeweils einen Qualitätsfaktor von wenigstens 10⁴ besitzen, und dass die Säulen derart gestaltet sind, dass sie einen Durchmesser in einer zweiten, quer verlaufenden Richtung aufweisen, derart, dass die Hohlräume die gleiche optische Mode aufweisen, und dass das Gerät ferner umfasst:
Wenigstens zwei Wellenlängen-Multiplexer (34), wobei jeder Multiplexer mit jeweiligen zweiten Enden (16) der optischen Fasern verbunden ist, um selektiv Photonen (35) von den zweiten Enden der optischen Fasern zu extrahieren.

2. Gerät nach Anspruch 1, wobei die zwei Spiegel (8, 9) erste und zweite verteilte Bragg-Reflektoren umfassen, wobei der erste verteilte Bragg-Reflektor (8) eine erste Anzahl von Perioden von alternierenden Schichten (43', 44') mit unterschiedlichen Brechungsindices umfasst, und der zweite verteilte Bragg-Reflektor (9) eine zweite, kleinere Anzahl von Perioden von alternierenden Schichten (48', 49') mit unterschiedlichen Brechungsindices umfasst.

3. Gerät nach Anspruch 2, wobei die erste Anzahl wenigstens 20 und optional wenigstens 23 beträgt.

4. Gerät nach Anspruch 2 oder 3, wobei die zweite Anzahl wenigstens 10 und optional wenigstens 13 beträgt.

5. Gerät nach einem der vorhergehenden Ansprüche, wobei die Säulen (5) einen Durchmesser zwischen ungefähr 0,5 µm und ungefähr 2 µm aufweisen.

6. Gerät nach einem der vorhergehenden Ansprüche, wobei die Photonen (35) eine Wellenlänge zwischen ungefähr 400 nm und ungefähr 1500 nm besitzen.

7. Gerät nach einem der Ansprüche 1 bis 6, wobei die Quantenpunkte (6) Aluminiumnitrid oder Indiumarsenid umfassen.

8. Gerät nach einem der vorhergehenden Ansprüche, wobei das Bündel (11) wenigstens 10 optische Fasern oder vorzugsweise wenigstens 20 optische Fasern umfasst.

9. Gerät nach einem der vorhergehenden Ansprüche, ferner umfassend:
Mittel (39) zum Verschränken erster und zweiter Photonen (35), die von jeweiligen ersten und zweiten der wenigstens zwei Photonenquellen (3) emittiert werden.

10. Gerät nach Anspruch 9, wobei die Photonenverschränkungsmittel einen Strahlteiler (71) umfassen.

11. Verfahren zur Erzeugung wenigstens eines Paars von einzelnen Photonen, wobei das Verfahren umfasst:
Bereitstellen von wenigstens zwei Photonenquellen (3), die auf einem gemeinsamen Substrat (4) getragen werden, wobei jede Photonenquelle eine Säule (5) umfasst, die von dem Substrat in einer ersten Richtung vorsteht und in der wenigstens ein Quantenpunkt (6) innerhalb eines Hohlraums (7) angeordnet ist, der in der ersten Richtung zwischen zwei Spiegeln (8, 9) ausgebildet ist, wobei die Säule eine Photonen emittierende Oberfläche (10) aufweist, wobei die Hohlräume jeweils einen Qualitätsfaktor von wenigstens 10⁴ besitzen, und die Säulen einen Durchmesser in einer zweiten, quer verlaufenden Richtung aufweisen, derart, dass die Hohlräume die gleiche optische Mode aufweisen;
Bereitstellen eines optischen Faserbündels (11), das wenigstens zwei optische Fasern (12) mit Photonen empfangenden Enden (15) umfasst, wobei jede optische Faser erste und zweite Enden (15, 16) hat, wobei das erste Ende das Photonen empfangende Ende ist;
Bereitstellen einer Kupplung (17) zum lösbaren Koppeln der Photonen empfangenden Enden mit den Photonen emittierenden Oberflächen;
Koppeln der ersten Enden der optischen Fasern mit den Photonen emittierenden Oberflächen;
Bereitstellen von wenigstens zwei Wellenlängen-Multiplexern (34), wobei jeder Multiplexer mit jeweiligen zweiten Enden (16) der optischen Fasern verbunden ist;
Zuführen von Anregungslicht (32) durch die Multiplexer hindurch in die zweiten Enden der optischen Fasern derart, dass das Anregungslicht von den ersten Enden emittiert wird, um die Quantenpunkte in den Hohlräumen anzuregen;
Sammeln von Licht (35), das von den Quantenpunkten emittiert wird, am Photonen empfangenden Ende (15) der Faser (12); und
Selektives Extrahieren von Photonen (35) durch die Multiplexer hindurch von den zweiten Enden der optischen Fasern.

12. Verfahren nach Anspruch 11, ferner umfassend:
Empfangen erster und zweiter Photonen (35), die von jeweiligen ersten und zweiten der wenigstens zwei Photonenquellen (3) emittiert werden; und
Verschränken der ersten und zweiten Photonen.

13. Verfahren nach Anspruch 12, ferner umfassend:
Empfangen wenigstens eines weiteren Photons einschließlich eines dritten Photons, das von einer dritten Photonenquelle (3) emittiert wird, welche auf dem gemeinsamen Substrat (4) getragen wird, und selektiv von einer dritten optischen Faser durch einen anderen Multiplexer extrahiert wird; und
Verschränken des ersten und dritten Photons.

## Revendications

1. Appareil comprenant :
au moins deux sources de photons (3) supportées sur un substrat commun (4), chaque source de photons comprenant un pilier (5) tenant debout à partir du substrat dans une première direction et dans lequel au moins une boîte quantique (6) est disposée dans une cavité (7) formée dans la première direction entre deux miroirs (8, 9), le pilier ayant une surface (10) d'émission de lumière ;
un faisceau (11) de fibres optiques comprenant au moins deux fibres optiques (12) ayant des extrémités (15) de réception de lumière, dans lequel chaque fibre optique a des première et deuxième extrémités (15, 16), la première extrémité étant l'extrémité de réception des photons ; et
un dispositif de serrage (17) destiné à coupler de manière amovible les extrémités de réception de lumière aux surfaces d'émission de lumière,
**caractérisé en ce que** les cavités ont chacune un facteur de qualité d'au moins 10⁴ et les piliers sont configurés pour avoir un diamètre dans une deuxième direction transversale tel que les cavités présentent le même mode optique, et l'appareil comprend en outre :
au moins deux multiplexeurs (34) de division de longueurs d'onde, chaque multiplexeur étant relié à des deuxièmes extrémités respectives (16) des fibres optiques pour extraire les photons (35) de manière sélective à partir des deuxièmes extrémités des fibres optiques.

2. Appareil selon la revendication 1, dans lequel les deux miroirs (8, 9) comprennent des premier et deuxième réflecteurs de Bragg distribués, le premier réflecteur de Bragg distribué (8) comprenant un premier nombre de périodes de couches alternées (43', 44') ayant différents indices de réfraction et le deuxième réflecteur de Bragg distribué (9) comprenant un deuxième, plus petit, nombre de périodes de couches alternées (48', 49') ayant différents indices de réfraction.

3. Appareil selon la revendication 2, dans lequel le premier nombre est au moins 20 et, éventuellement, au moins 23.

4. Appareil selon la revendication 2 ou 3, dans lequel le deuxième nombre est au moins 10 et, éventuellement, au moins 13.

5. Appareil selon l'une quelconque des revendications précédentes, dans lequel les piliers (5) ont un diamètre compris entre environ 0,5 µm et environ 2 µm.

6. Appareil selon l'une quelconque des revendications précédentes, dans lequel les photons (35) ont une longueur d'onde comprise entre environ 400 nm et environ 1500 nm.

7. Appareil selon l'une quelconque des revendications 1 à 6, dans lequel les boîtes quantiques (6) comprennent du nitrure d'aluminium ou de l'arséniure d'indium.

8. Appareil selon l'une quelconque des revendications précédentes, dans lequel le faisceau (11) comprend au moins 10 fibres optiques ou de préférence au moins 20 fibres optiques.

9. Appareil selon l'une quelconque des revendications précédentes, comprenant en outre :
un moyen (39) destiné à enchevêtrer des premier et deuxième photons (35) émis par les première et deuxième sources de photons respectives des au moins deux sources (3) de photons.

10. Appareil selon la revendication 9, dans lequel le moyen d'enchevêtrement des photons comporte un séparateur (71) de faisceaux.

11. Procédé destiné à générer au moins une paire de photons uniques, le procédé comprenant le fait :
de fournir au moins deux sources (3) de photons supportées sur un substrat commun (4), chaque source de photons comprenant un pilier (5) tenant debout depuis le substrat dans une première direction et dans lequel au moins une boîte quantique (6) est disposée dans une cavité (7) formée dans la première direction entre deux miroirs (8, 9), le pilier ayant une surface (10) d'émission de photons, les cavités ayant chacune un facteur de qualité d'au moins 10⁴ et les piliers ayant un diamètre dans une deuxième direction, transversale, de sorte que les cavités présentent le même mode optique ;
de fournir un faisceau (11) de fibres optiques comprenant au moins deux fibres optiques (12) ayant des extrémités (15) de réception de photons, dans lequel chaque fibre optique a des première et deuxième extrémités (15, 16), la première extrémité étant l'extrémité de réception de photons ;
de fournir un dispositif de serrage (17) destiné à coupler de manière amovible les extrémités de réception de photons aux surfaces d'émission de photons ;
de coupler les premières extrémités des fibres optiques aux surfaces d'émission de photons ;
de fournir au moins deux multiplexeurs (34) de division de longueurs d'onde, chaque multiplexeur étant relié aux deuxièmes extrémités respectives (16) des fibres optiques ;
de fournir une lumière d'excitation (32), par l'intermédiaire des multiplexeurs, dans les deuxièmes extrémités des fibres optiques de sorte que la lumière d'excitation soit émise par les premières extrémités pour exciter les boîtes quantiques dans les cavités ;
de collecter la lumière (35) émise par les boîtes quantiques au niveau de l'extrémité (15) de réception de photons de la fibre (12) ; et
d'extraire les photons (35) de manière sélective, par l'intermédiaire des multiplexeurs, à partir des deuxièmes extrémités des fibres optiques.

12. Procédé selon la revendication 11, comprenant en outre le fait :
de recevoir des premier et deuxième photons (35) émis par les première et deuxième sources de photons respectives des au moins deux sources de photons (3) ; et
d'enchevêtrer lesdits premier et deuxième photons.

13. Procédé selon la revendication 12, comprenant en outre le fait :
de recevoir au moins un photon supplémentaire comportant un troisième photon émis par une troisième source (3) de photons supportée sur le substrat commun (4) et extrait de manière sélective d'une troisième fibre optique par l'intermédiaire d'un autre multiplexeur ; et
d'enchevêtrer lesdits premier et troisième photons.
